# EUROPÄISCHE PATENTSCHRIFT

(11) **EP 0 803 427 B1**
(45) Veröffentlichungstag und Bekanntmachung des Hinweises auf die Patenterteilung: **14.11.2001**
(21) Anmeldenummer: 97104653.7
(22) Anmeldetag: 19.03.1997
(51) Int. Cl.: B62D 7/00, B62D 5/06, B62D 5/09, B62D 6/00

(54) **Fahrzeuglenkung**
Vehicle steering device
Direction pour véhicule

(30) Priorität: 25.04.1996 DE 19616437
(43) Veröffentlichungstag der Anmeldung: 29.10.1997
(73) Patentinhaber: DaimlerChrysler AG, 70567 Stuttgart (DE)
(72) Erfinder: Bohner, Hubert, 71032 Böblingen (DE); Moser, Martin, 70736 Fellbach (DE)

(56) Entgegenhaltungen:
- EP-A- 0 261 325
- DE-A- 4 110 148

## Beschreibung

Die Erfindung betrifft eine Fahrzeuglenkung mit vom Fahrer betätigter Lenkhandhabe, insbesondere Lenkhandrad, und damit wirkverbundenen gelenkten Fahrzeugrädern, wobei die Lenkhandhabe eine Sollwertgeberanordnung betätigt und die gelenkten Fahrzeugräder durch einen hydraulischen Stellantrieb betätigt werden, der seinerseits mittels elektrisch betätigter Magnetventilanordnung gesteuert wird, deren elektrischer Ventilstrom von einem durch Soll-Istwert-Vergleich des Lenkwinkels bzw. einer damit korrelierten Größe bestimmten Regelanteil abhängig ist und zusätzlich in Abhängigkeit von einem sollwertabhängigen Steueranteil gesteuert wird.

Bei üblichen Fahrzeuglenkungen in Personenkraftwagen sind das Lenkhandrad und die Fahrzeuglenkräder zur Lenkbetätigung miteinander mechanisch zwangsgekoppelt.

Insbesondere aus dem Flugzeugbau ist es grundsätzlich bekannt, Flügelklappen bzw. Leitflächen dadurch zu steuern, daß der Pilot mittels einer Steuerhandhabe lediglich einen Sollwertgeber betätigt, der dann über eine elektronisch arbeitende Regelstrecke mit den Flügelklappen bzw. Leitwerken wirkungsverbunden ist. Dieses auch als "Fly by wire" bezeichnete Konzept ist inzwischen derart zuverlässig, daß es sogar für Passagiermaschinen eingesetzt wird.

Grundsätzlich muß davon ausgegangen werden, daß entsprechende Konzepte auch für Fahrzeuglenkungen einsetzbar und vorteilhaft sind, insbesondere weil dann der andernfalls für die Lenksäule bzw. die mechanische Zwangskopplung zwischen Lenkhandrad und Lenkrädern benötigte Raum anderweitig genutzt werden kann und bei der Entwicklung des Fahrzeuges nicht mehr berücksichtigt werden muß. Außerdem wird durch Wegfall der Lenksäule das Verletzungsrisiko für den Fahrer bei einem Unfall vermindert.

Die DE 41 10 148 A1 zeigt eine Fahrzeuglenkung der eingangs angegebenen Art. Nach dieser Druckschrift ist vorgesehen, den Steueranteil proportional zur Änderungsgeschwindigkeit des Sollwertes zu bestimmen und ggf. auch die Fahrgeschwindigkeit zu berücksichtigen.

Aus der DE 38 23 413 A1 ist eine Fahrzeuglenkung für unbemannte Transportfahrzeuge bekannt, welche z.B. in Fertigungsanlagen eingesetzt und durch induktiv arbeitende Fahrzeugführungssysteme gesteuert werden. Um den Energiebedarf der bekannten Fahrzeuglenkung gering zu halten, ist vorgesehen, den hydraulischen Systemdruck dem jeweiligen Bedarf anzupassen. In der Regel hat der hydraulische Systemdruck einen vergleichsweise geringen Wert, welcher erhöht wird, wenn eine Soll-Istwert-Differenz andernfall nicht ausgeregelt werden könnte.

Diese bekannte Fahrzeuglenkung arbeitet also mit einer gewissen Trägheit, welche jedoch im Hinblick auf die regelmäßig geringe Fahrgeschwindigkeit der unbemannten Transportsysteme toleriert werden kann.

Die DD 237 639 A1 sowie die DE 92 05 781 U1 zeigen elektrohydraulische Lenkvorrichtungen, insbesondere für Landmaschinen und Traktoren bzw. Kraftfahrzeug-Hinterachsen. Dabei können PID-Regler eingesetzt werden.

Aufgabe der Erfindung ist es nun, eine besonders vorteilhafte Ausgestaltung einer Lenkung der eingangs angegebenen Art aufzuzeigen, wobei die Lenkung auch für übliche Straßenfahrzeuge einsetzbar und gegenüber Vibrationen unempfindlich sein soll.

Diese Aufgabe wird erfindungsgemäß dadurch gelöst, daß der Regelanteil einen Proportionalanteil sowie - oberhalb eines Schwellwertes der Regeldifferenz - auch einen Differentialanteil der Regeldifferenz umfaßt.

Indem bei geringfügigen Regeldifferenzen erfindungsgemäß kein Differentialanteil berücksichtigt wird, wird insbesondere bei möglichen Vibrationen im Fahrzeug, beispielsweise aufgrund von Unwuchten der Räder, ein komfortables Fahrverhalten gewährleistet. Insbesondere ist sichergestellt, daß die Regelung die auftretenden Schwingungen nicht verstärken kann.

Gleichwohl wird durch den Steueranteil, welcher vorzugsweise proportional zur Änderungsgeschwindigkeit des Sollwertes ist, bei schnellen Lenkmanövern, etwa wenn einem plötzlich auftauchenden Hindernis ausgewichen werden muß, eine besonders verzögerungsfreie Betätigung der Fahrzeuglenkräder sichergestellt.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung beschrieben wird.

Dabei zeigt
- Fig. 1: eine schematisierte Gesamtdarstellung der erfindungsgemäßen Fahrzeuglenkung und
- Fig. 2: ein Blockschaltbild des Sollwertgebers und der Regelstrecke.

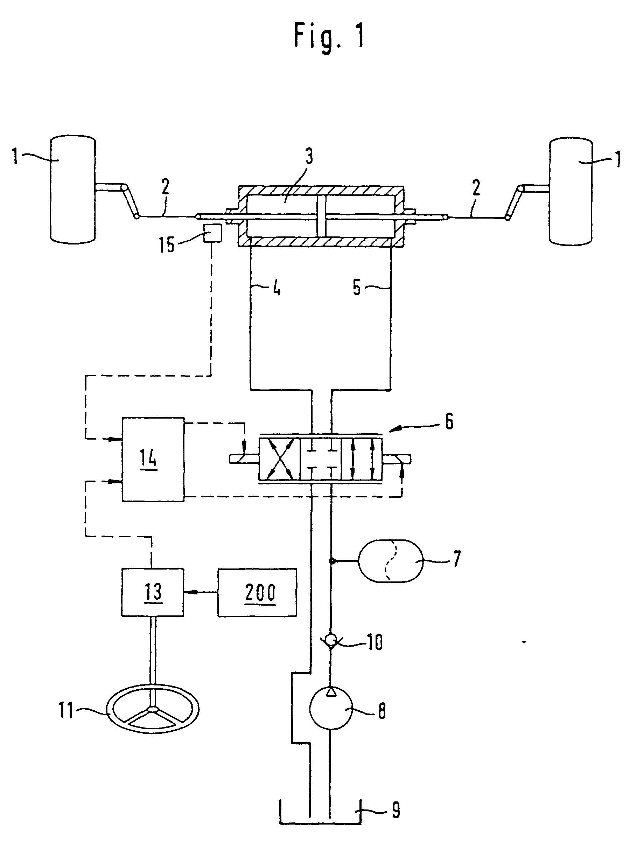

Gemäß Fig. 1 besitzt ein nicht näher dargestelltes Kraftfahrzeug zumindest eine Achse mit Fahrzeuglenkrädern 1, die über Spurstangen 2 od.dgl. mit einem hydraulischen Stellaggregat 3 mechanisch zwangsgekoppelt sind, welches im dargestellten Beispiel als doppeltwirkendes Kolben-Zylinder-Aggregat ausgebildet ist. Dieses Kolben-Zylinder-Aggregat 3 besitzt zwei durch seinen Kolben voneinander abgeteilte Hydraulikkammern, die über Leitungen 4 und 5 mit einem elektromagnetisch betätigbaren Proportionalventil 6 verbunden sind, welches seinerseits einerseits mit einem hydraulischen Druckspeicher 7, der von einer Hydraulikpumpe 8 ständig auf einem vorgegebenen Druck behalten wird, und andererseits mit einem Hydraulikreservoir 9 verbunden ist, an das auch die Saugseite der Pumpe 8 angeschlossen ist. Um eine Entladung des Druckspeichers 7 bei gegebenenfalls stillstehender Pumpe 8 zu verhindern, ist zwischen Pumpe 8 und Druckspeicher 7 ein Rückschlagventil 10 angeordnet.

Der Druck des Druckspeichers 7 ist so bemessen und das Proportionalventil 6 ist so ausgelegt, daß der jeweilige Hydraulikstrom proportional dem elektrischen Ventilstrom ist. Damit ist die Stellgeschwindigkeit des Stellaggregates 3 proportional zum elektrischen Ventilstrom.

Ein vom Fahrer betätigtes Lenkhandrad 11 steuert einen Sollwertgeber 13, welcher ein den Drehwinkel des Lenkhandrades 11 wiedergebendes elektrisches Signal erzeugt und an einen Eingang einer elektronischen Regelschaltung 14 weiterleitet. Ein weiterer Eingang der Regelschaltung 14 ist mit einem Sensor 15 verbunden, dessen Signal den Hub des Kolben-Zylinder-Aggregates 3 repräsentiert. Ausgangsseitig steuert die Regelschaltung 14 die Stellmagnete des Proportionalventiles 6.

Gegebenenfalls kann der Sollwertgeber 13 einen Eingang aufweisen, welcher Signale einer autonomen Steuerung 200 empfängt, die beispielsweise dazu dienen kann, das Fahrzeug automatisch in einer vorzugebenen Spur zu halten oder bei böigen Seitenwinden Lenkkorrekturen vorzunehmen.

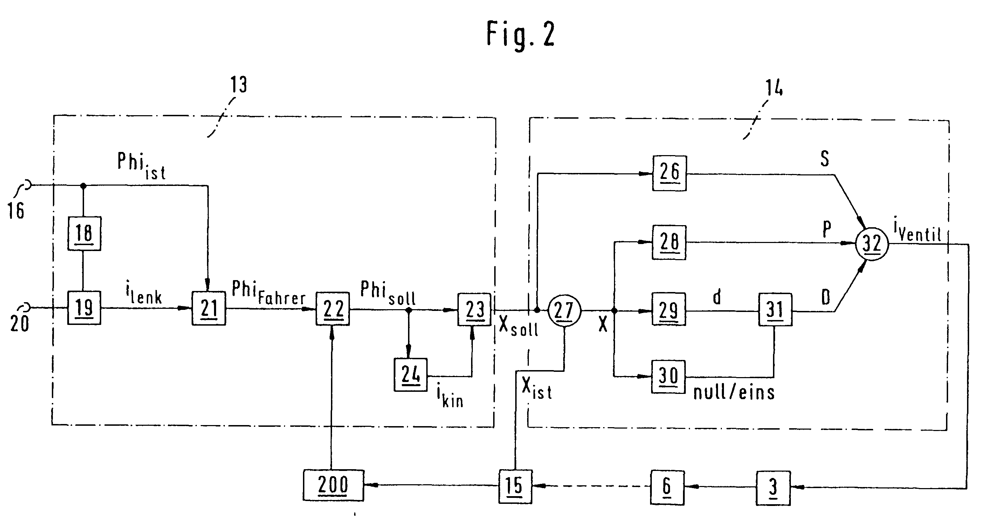

Gemäß Fig. 2 besitzt der dargestellte Sollwertgeber 13 einen Eingang 16, der mit einem durch das Lenkhandrad 11 betätigten Drehwinkelgeber verbunden ist. Dieser Drehwinkelgeber erzeugt ein Signal Phiᵢₛₜ, welches den Drehwinkel des Lenkhandrades wiedergibt. Dieses Signal wird einer Stufe 18 zugeführt, deren Ausgangssignal den Betrag der Differenz zwischen der Mittellage des Lenkhandrades und der jeweils eingestellten Drehlage des Lenkhandrades 11 repräsentiert.

Die Stufe 18 ist ausgangsseitig mit einer Stufe 19 verbunden, deren weiterer Eingang 20 ständig Signale über die Fahrgeschwindigkeit erhält. Damit kann die Stufe 19 ausgangsseitig ein Signal iₗₑₙₖ erzeugen, welches ein geschwindigkeitsabhängiges Übersetzungsverhältnis zwischen dem Drehwinkel des Lenkhandrades 11 und dem Lenkwinkel der Fahrzeuglenkräder 1 repräsentiert.

Dieses Signal iₗₑₙₖ wird an einen Eingang eines Dividierers 21 weitergeleitet, welcher darüber hinaus mit dem Eingang 16 verbunden ist und dementsprechend die Signale Phiᵢₛₜ, welche den Drehwinkel des Lenkhandrades 11 repräsentieren, empfängt. Durch dividierende Verknüpfung der Signale Phiᵢₛₜ und iₗₑₙₖ wird nun ein Signal Phi_{Fahrer} erzeugt, welches als fahrerseitige Lenkwinkelvorgabe für die Fahrzeuglenkräder 1 aufgefaßt werden kann.

Dieses Signal wird an eine Addierstufe 22 weitergegeben, die zusätzlich Signale einer autonomen Lenkregelung-200 erhält, deren Signale beispielsweise Lenkkorrekturen zum Ausgleich von Seitenwindeinflüssen oder auch sonstige Lenkvorgaben darstellen können. Beispielsweise können diese Signale auch die "gewünschten" Lenkwinkel der Fahrzeuglenkräder 1 repräsentieren, wenn das Fahrzeug automatisch einer vorgegebenen Spur folgen soll.

Ausgangsseitig der Addierstufe 22 liegt nun ein Signal Phiₛₒₗₗ vor, welches den Sollwert der Lenkwinkel der Fahrzeuglenkräder 1 repräsentiert.

Dieses Signal wird einerseits unmittelbar einem Eingang eines Multiplizierers 23 zugeführt, dessen anderer Eingang mit einer Stufe 24 verbunden ist, die eingangsseitig ebenfalls das Signal Phiₛₒₗₗ erhält. In der Stufe 24 wird nun die Kinematik der Antriebsübertragung zwischen Stellaggregat 3 (vgl. Fig.1) und den Fahrzeuglenkrädern 1 berücksichtigt. In der Regel ist der Lenkwinkel der Fahrzeuglenkräder 1 nicht exakt linear proportional zum Stellhub des Stellaggregates 3. In der Stufe 24 wird deshalb ein Signal iₖᵢₙ erzeugt, welches als Korrekturfaktor aufgefaßt werden kann.

Das Signal iₖᵢₙ und das Signal Phiₛₒₗₗ werden nun im Multiplizierer 23 miteinander multiplikativ verknüpft, so daß ausgangsseitig ein Signal xₛₒₗₗ vorliegt, welches denjenigen Sollwert des Stellhubes des Stellaggregates 3 repräsentiert, der aufgrund der jeweiligen Kinematik der Antriebsübertragung zwischen Stellaggregat 3 und Fahrzeuglenkrädern 1 dem jeweiligen Sollwert Phiₛₒₗₗ des Lenkwinkels der Fahrzeuglenkräder entspricht.

Das Signal xₛₒₗₗ bildet das Ausgangssignal des Sollwertgebers 13 bzw. das Eingangssignal des Reglers 14.

Im Regler 14 wird das Signal xₛₒₗₗ einerseits einer Differenzierstufe 26 zugeführt, die ausgangsseitig einen von der Änderungsgeschwindigkeit des Sollwertes xₛₒₗₗ abhängigen Ausgang S erzeugt.

Andererseits wird das Signal xₛₒₗₗ einem Vergleicher 27 zugeführt, der dieses Signal mit dem Istwert xᵢₛₜ des Stellhubes des Stellaggregates 3 vergleicht; dieses Signal xᵢₛₜ wird mittels des Sensors 15 (vgl. Fig. 1) erzeugt.

Ausgangsseitig erzeugt der Vergleicher 27 ein Signal X, welches die Regeldifferenz, d.h. die Differenz zwischen xₛₒₗₗ und xᵢₛₜ wiedergibt.

Dieses Signal X wird im Sinne einer modifizierten PD-Regelung verarbeitet.

Dazu wird in einer Stufe 28, die eingangsseitig das Signal X erhält, ein Signal P erzeugt, welches proportional zur Regeldifferenz ist. Außerdem wird in einer Differenzierstufe 29, die das Signal X ebenfalls empfängt, ein Signal d erzeugt, welches proportional zur Änderungsgeschwindigkeit der Regeldifferenz X ist.

Außerdem wird die Regeldifferenz X einer Stufe 30 zugeführt, die ausgangsseitig ein Signal "null" erzeugt, wenn der Betrag der Regeldiffernz X unterhalb eines ersten Schwellwertes liegt. Liegt der Betrag der Regeldifferenz X oberhalb eines zweiten Schwellwertes, der größer als der erste Schwellwert ist, erzeugt die Stufe 30 ausgangsseitig ein Signal "eins". Liegt die Regeldifferenz X betragsmäßig zwischen den beiden Schwellwerten, wird ausgangsseitig von der Stufe 30 ein Signal erzeugt, welches zwischen "null" und "eins" liegt und mit betragsmäßig ansteigenden Regeldifferenzen anwächst.

In einem Multiplizierer 31 werden die Signal d und die Ausgangssignale der Stufe 30 miteinander multiplikativ verknüpft, so daß ausgangsseitig ein Signal D erzeugt wird. Falls die Regeldifferenz X betragsmäßig oberhalb des zweiten Schwellwertes liegt, entspricht das Signal D dem Signal d. Falls die Regeldifferenz X betragsmäßig kleiner als der erste Schwellwert ist, entspricht das Signal D dem Signal "null". Falls die Regeldifferenz X betragsmäßig zwischen den beiden Schwellwerten liegt, repräsentiert das Signal D einen Wert zwischen "null" und dem vom Signal d repräsentierten Wert.

Das Signal S, welches einen Steueranteil repräsentiert und das Signal P, welches einen proportionalen Regelanteil repräsentiert, sowie das Signal D, welches einen modifizierten differentiellen Regelanteil darstellt, werden in einem Summierer 32 additiv miteinander verknüpft, dessen Ausgangssignal den elektrischen Ventilstrom i_{Ventil} für die Stellmagnete des Proportionalventils 6 darstellen.

Damit steuert das Signal i_{Ventil} im Ergebnis das Stellaggregat 3, dessen Stellhub vom Sensor 15 überwacht wird, der dementsprechend das Signal xᵢₛₜ erzeugt, welches die Istlage des Stellaggregates 3 wiedergibt und dem Vergleicher 27 zugeführt wird, wie bereits oben erwähnt wurde. Andererseits kann dieses Signal auch der autonomen Steuerung 200 für besondere Fahrzustände zugeführt werden.

Die Differenzierstufen 26 und 29 können gegebenenfalls durch entsprechend abgestimmte Hochpaßfilter gebildet sein.

## Patentansprüche

1. Fahrzeuglenkung mit vom Fahrer betätigter Lenkhandhabe, insbesondere Lenkhandrad (11), und damit wirkverbundenen gelenkten Fahrzeugrädern (1), wobei die Lenkhandhabe eine Sollwertgeberanordnung (13) betätigt und die gelenkten Fahrzeugräder durch einen hydraulischen Stellantrieb (3) betätigt werden, der seinerseits mittels elektrisch betätigter Magnetventilanordnung (6) gesteuert wird, deren elektrischer Ventilstrom von einem durch Soll-Istwert-Vergleich des Lenkwinkels bzw. einer damit korrelierten Größe bestimmten Regelanteil abhängig ist und zusätzlich in Abhängigkeit von einem sollwertabhängigen Steueranteil (S) gesteuert wird,
**dadurch gekennzeichnet,**
**daß** der Regelanteil (P,D) einen Proportionalanteil (P) sowie oberhalb eines Schwellwertes der Regeldifferenz (X) auch einen Differentialanteil (D) der Regeldifferenz (X) umfaßt.

2. Fahrzeuglenkung nach Anspruch 1,
**dadurch gekennzeichnet,**
**daß** der Steueranteil (S) proportional der Änderunsgeschwindigkeit des Sollwertes (xₛₒₗₗ) ist.

3. Fahrzeuglenkung nach einem der Ansprüche 1 und 2,
**dadurch gekennzeichnet,**
**daß** der elektrische Ventilstrom proportional zur Stellgeschwindigkeit des Stellantriebes (3) ist.

4. Fahrzeuglenkung nach einem der Ansprüche 1 bis 3,
**dadurch gekennzeichnet,**
**daß** die Sollwertgeberanordnung (13) fahrgeschwindigkeitsabhängig arbeitet, z.B. derart, daß der Sollwert im Sinne eines Produktes sowohl von der Stellung der Lenkhandhabe als auch der Fahrgeschwindigkeit abhängt.

5. Fahrzeuglenkung nach einem der Ansprüche 1 bis 4,
**dadurch gekennzeichnet,**
**daß** die Sollwertgeberanordnung (13) eine Einheit (24) umfaßt, die eine Nichtlinearität zwischen Stellweg des Stellaggregates (3) und Lenkwinkel der Fahrzeuglenkräder (1) kompensiert.

6. Fahrzeuglenkung nach einem der Ansprüche 1 bis 5,
**dadurch gekennzeichnet,**
**daß** die Sollwertgeberanordnung (13) einen Eingang für eine autonome Steuerung (200) in Abhängigkeit von vorzugebenden Parametern aufweist.

## Claims

1. A vehicle steering system with a driver-actuated steering control, in particular a steering wheel (11), and vehicle wheels (1) which are connected to and actuated by it, with the steering control actuating a set-point adjuster arrangement (13) and the steered vehicle wheels being actuated by means of a hydraulic actuating drive (3) which is itself controlled by means of an electrically actuated solenoid valve arrangement (6) with an electrical valve current dependent upon a control component determined by means of a variance comparison of the steering angle or a value correlated therewith and in addition is controlled by a control component (S) dependent upon a set-point value,
**characterised in that**
the control component (P, D) comprises both a proportional component (P) and, above a threshold value of control difference (X), a differential component (D) of control difference (X).

2. A vehicle steering system in accordance with claim 1,
**characterised in that**
the control component is proportional to the rate of increase of the set-point value (Xₛₒₗₗ).

3. A vehicle steering system in accordance with claims 1 and 2,
**characterised in that**
the electrical valve current is proportional to the regulating speed of the actuating drive.

4. A vehicle steering system in accordance with one of claims 1 to 3,
**characterised in that**
the set-point adjuster arrangement (13) operates dependent upon driving speed, e.g. in such a manner that the set-point value as a product depends both on the position of the steering control and the driving speed.

5. A vehicle steering system in accordance with one of claims 1 to 4,
**characterised in that**
the set-point adjuster arrangement (13) comprises a unit (24) which compensates for a non-linearity between the regulating path of the actuating unit (3) and the steering angle of the vehicle steering wheels (1).

6. A vehicle steering system in accordance with one of claims 1 to 5,
**characterised in that**
the set-point adjuster arrangement (13) has an input for an independent control device (200) dependent upon pre-determined parameters.

## Revendications

1. Direction pour véhicule comportant une commande manuelle de direction, en particulier un volant (11), manoeuvrable par le conducteur et des roues directrices (1) qui lui sont fonctionnellement reliées, dans lequel la commande manuelle de direction manoeuvre un dispositif émetteur de la valeur prescrite (13) et les roues directrices sont manoeuvrées par l'intermédiaire d'un mécanisme réglant hydraulique (3) qui de son côté est commandé au moyen d'un dispositif de vannes électromagnétiques (6) dont le courant électrique de vannes dépend d'une composante de régulation déterminée par comparaison valeur prescrite-valeur réelle de l'angle de braquage ou d'une grandeur qui lui est corrélée et est en outre commandé en fonction d'une composante de commande (S) fonction de la valeur prescrite, **caractérisée par le fait que** la composante de régulation (P, D) comporte une composante proportionnelle (P) ainsi qu'également, au-dessus d'une valeur de seuil de l'écart de régulation (x), une composante différentielle (D) de l'écart de régulation (x).

2. Direction pour véhicule selon la revendication 1, **caractérisé par le fait que** la composante de commande (S) est proportionnelle à la vitesse de modification de la valeur prescrite (xₚᵣ).

3. Direction pour véhicule selon l'une des revendications 1 à 2, **caractérisé par le fait que** le courant électrique de vannes est proportionnel à la vitesse réglante du mécanisme réglant (3).

4. Direction pour véhicule selon l'une des revendications 1 à 3, **caractérisé par le fait que** le dispositif émetteur de valeur prescrite (13) travaille en fonction de la vitesse de marche du véhicule, par exemple de façon que la valeur prescrite dépende, au sens d'un produit, aussi bien de la position de la commande manuelle de direction que de la vitesse de marche du véhicule.

5. Direction pour véhicule selon l'une des revendications 1 à 4, **caractérisé par le fait que** le dispositif émetteur de valeur prescrite (13) comporte un organe (24) qui compense une non-linéarité entre course réglante du mécanisme réglant (3) et angle de braquage des roues directrices du véhicule (1).

6. Direction pour véhicule selon l'une des revendications 1 à 5, **caractérisé par le fait que** le dispositif émetteur de valeur prescrite (13) présente une entrée pour une commande autonome (200) en fonction de paramètres à prescrire.
